## Europäisches Patentamt

## European Patent Office

## Office européen des brevets

(19)

(11) Veröffentlichungsnummer: **0 332 842**
**B1**

(12) **EUROPÄISCHE PATENTSCHRIFT**

(45) Veröffentlichungstag der Patentschrift:
18.07.90

(51) Int. Cl.⁵: **B60K 20/02**

(21) Anmeldenummer: **89102104.0**

(22) Anmeldetag: **08.02.89**

(54) **Lagerung für den Schalthebel des Wechselgetriebes in Kraftfahrzeugen.**

(30) Priorität: **12.03.88 DE 3808272**

(43) Veröffentlichungstag der Anmeldung:
**20.09.89 Patentblatt 89/38**

(45) Bekanntmachung des Hinweises auf die Patenterteilung:
**18.07.90 Patentblatt 90/29**

(84) Benannte Vertragsstaaten:
**DE ES FR GB IT SE**

(56) Entgegenhaltungen:
**FR-A- 893 743**
**GB-A- 1 182 766**

**SOVIET INVENTIONS ILLUSTRATED, Woche C06, 19. März 1980, Sektion P/Q, Klasse Q13, Zusammenfassung Nr. B3383C/06, Derwent Publications Ltd, London, GB; & SU-A-663 613 (A.A. SOSHNIKOV et al.) 28-05-1979**

(73) Patentinhaber: **Lemförder Metallwaren AG,
Postfach 1220, D-2844 Lemförde(DE)**

(72) Erfinder: **Buhl, Reinhard, Dipl.-Ing.,
Eichendorffstrasse 9, D-4508 Bohmte(DE)**
Erfinder: **Stöckert, Ulrich, Dipl.-Ing.,
Pommernstrasse 10, D-2840 Diepholz(DE)**
Erfinder: **Schmidt, Andreas, Dipl.-Ing., Eschstrasse 10,
D-4508 Bohmte(DE)**

(74) Vertreter: **Bruse, Willy Hans Heinrich, Edisonstrasse 14,
D-2800 Bremen 33(DE)**

## Beschreibung

Die Erfindung betrifft eine Lagerung des Schalthebels zur mechanischen Fernbetätigung der Schaltwelle eines Wechselgetriebes in Kraftfahrzeugen entsprechend dem Oberbegriff des Patentanspruches 1.

Eine Lagerung mit diesen Merkmalen ist in der AT-PS 2 547 17 offenbart. Hiernach ist der von Hand betätigbare Schalthebel mit einer Gelenkkugel in einem Bauteil der Karosserie allseits schwenkbar gelagert und gelenkig mit einem Hebel verbunden, der die ihm durch die Schalthebelbewegung übertragene Winkelbewegung mittels Zwischenglieder auf eine Schaltstange überträgt, die ihrerseits durch weitere Zwischenglieder gelenkig mit der in dem Wechselgetriebe in Drehrichtung schwenkbar und axial verschiebbar gelagerten Schaltwelle verbunden ist. Die genannten Zwischenglieder sind zur Kompensation von Wegkomponenten erforderlich, die von der Schalthebelbewegung auf einem Kreisbogen ausgehen und die nicht auf die exakt geführte Schaltwelle im Innern des Wechselgetriebes übertragen werden können. Für die Schaltung des Wechselgetriebes können nur eine reine Drehbewegung um die Längsachse (Wählachse) der Schaltwelle und eine reine Linearbewegung in Achsrichtung der Schaltwelle (Schaltung) genutzt werden. Üblicherweise erfolgt die Drehbewegung der Schaltwelle um ihre Längsachse durch seitliches Verschwenken des Schalthebels und die axiale Verschiebung der Schaltwelle durch Schwenkbewegung des Schalthebels in Fahrtrichtung.

Gelenkkugeln in der Lagerung eines Schalthebels für das Wechselgetriebe in Kraftfahrzeugen sind auch aus der DE-PS 3 208 543, der DE-OS 3 016 373 und der EP-A 0 104 024 bekannt.

Aufgabe der Erfindung ist die Gestaltung einer Lagerung für den Schalthebel mit einer exakten Führung des Schalthebels auf dem Wählweg und auf dem Schaltweg mit gegenüber dem Stande der Technik verringerten Bauteilen, reduziertem Bauraumbedarf für die Unterbringung und verringertem Kraftaufwand für die Ausführung der Schaltbewegung.

Die Erfindung löst diese Aufgabe durch die Ausbildungsmerkmale nach dem Kennzeichen des Patentanspruches 1.

Eine mit diesen Merkmalen ausgeführte Lagerung ermöglicht exakte Führungen des Schalthebels sowohl beim Verschwenken in der Wählebene als auch beim Verschwenken in der Schaltebene um eindeutig definierte Achsen, die durch Zapfenlager realisierbar sind. Gleichzeitig können die zur Übertragung der Schalthebelwege auf die Schaltwelle im Getriebe und zur Kompensation unerwünschter Bewegungskomponenten benötigten Bauteile erheblich reduziert werden. Die exakte Führung ermöglicht reibungsarme Gelenkverbindungen, so daß der Schalthebel mit äußerst geringem Kraftaufwand zur Ausführung der Schaltbewegungen beweglich ist.

Eine praktische Ausführungsform der Erfindung sieht einen Schaltlagerkörper mit außen kugeliger Kontur vor, in dem der Schalthebel auf einem Schwenkzapfen um die Schaltachse schwenkbar gelagert ist und der mit Zapfen, deren gemeinsame Achse einen rechten Winkel zur Schwenkachse des Schalthebels im Schaltlagerkörper bildet, in Ausnehmungen des an der Karosserie festen Bauteils sowohl um ihre gemeinsame Achse als auch um die Hochachse des Schalthebels drehbar gelagert ist.

Dadurch wird die beim Schwenken des Schalthebels um die Wählachse, wenn sich das untere Schaltende des Schalthebels auf einem Kreisbogen bewegt, kinematisch bedingte Verdrehung des Schalthebels um seine Hochachse zusammen mit dem Schaltlagerkörper ermöglicht. Dies ermöglicht die Verwendung einer umgelagerten Schaltstange, die lediglich durch ein kardanisch wirksames Gelenk mit der Schaltwelle im Wechselgetriebe und durch ein einfaches Scharniergelenk mit dem unteren Schaltende des Schalthebels verbunden ist. Besonders vorteilhaft ist die durch die Erfindungsmerkmale mögliche integrale Bauweise der Lagerung des Schalthebels, worunter zu verstehen ist, daß der Schalthebel mit allen Teilen seiner Lagerung vorgefertigt, als Einheit eingebaut und dann lediglich an die Schaltstange angelenkt wird. Schließlich ist besonders hervorzuheben, daß die Erfindungsmerkmale den Einsatz einer Lagerung mit zwei exakt definierten Bewegungsachsen für den Schalthebel auf kleinstem Raum ermöglicht und dadurch der modernen Bauart von Kraftfahrzeugen entgegenkommt, bei der für die Unterbringung von Bedienungsgestängen immer weniger Raum zur Verfügung steht.

Die Zeichnung zeigt ein Ausführungsbeispiel der Erfindung, und zwar in

Figur 1 eine schematische Seitenansicht der Lagerung des Schalthebels,

Figur 1a eine Darstellung des Auslenkwinkels der Schaltstange, welcher bei der Wählbewegung des Schalthebels entsteht,

Figur 2 in einem gegenüber Figur 1 vergrößerten Maßstab einen Schnitt nach der Linie II - II der Figur 1,

Figur 3 einen Schnitt nach der Linie III - III der Figur 2 und

Figur 4 einen Schnitt nach der Linie IV - IV der Figur 3.

Im Falle des Ausführungsbeispieles ist der Schalthebel 1, welcher an seinem oberen Ende meistens einen aufgesetzten Knauf 2 aufweist, im unteren Bereich mittels eines Gelenkzapfens 3 in einem Schaltlagerkörper 4 schwenkbar gelagert. Der Schaltlagerkörper 4 weist außen eine kugelige Kontur auf und ist an zwei sich gegenüberliegenden Stellen mit Lagerzapfen 5 ausgebildet, deren gemeinsame Achse 6 etwa rechtwinklig zur Achse 7 des Zapfens 3 liegt. Mit diesen Zapfen 5 greift der Schaltlagerkörper 4 in geschlitzte Ausnehmungen 8 eines Ringes 9 aus einem verschleißarmen Kunststoff ein, der in eine Ausnehmung 10 eines an der Karosserie festen Bauteiles 11 eingesetzt und darin mittels eines Federringes 12 gehalten ist. Die sich in dem Ring 9 peripher erstreckenden Schlitze 8 ermöglichen dem Schaltlagerkörper 4 eine begrenzte Drehbewegung um die Hochachse 13 des Schalthebels 1. Das untere Schaltende dieses Schalthebels 1 ist mittels eines einfachen Scharniergelenkes 14 mit dem einen Ende der Schaltstange 15 verbunden, deren anderes Ende durch ein kardanisch wirksames Gelenk 16, zum Beispiel ein Kreuzgelenk, mit der auf der Zeichnung nur angedeuteten Schaltstange 17 des Wechselgetriebes verbunden ist.

Bei dem Beispiel der Zeichnung definiert die Achse 6 der Zapfen 5 die Wählachse, und diese ist in Anlehnung an herkömmliche Schalthebellagerungen etwa in Fahrtrichtung des Fahrzeuges ausgerichtet. Quer dazu liegt die Schaltachse 7 des Zapfens 3, mit dem der Schalthebel 1 in dem Schaltlagerkörper 4 gelagert ist. Diese Schaltachse 7 liegt dementsprechend quer zur Fahrtrichtung, so daß der Schalthebel 1 für Wählbewegungen in Querrichtung und für Schaltbewegungen in Fahrtrichtung bewegt wird.

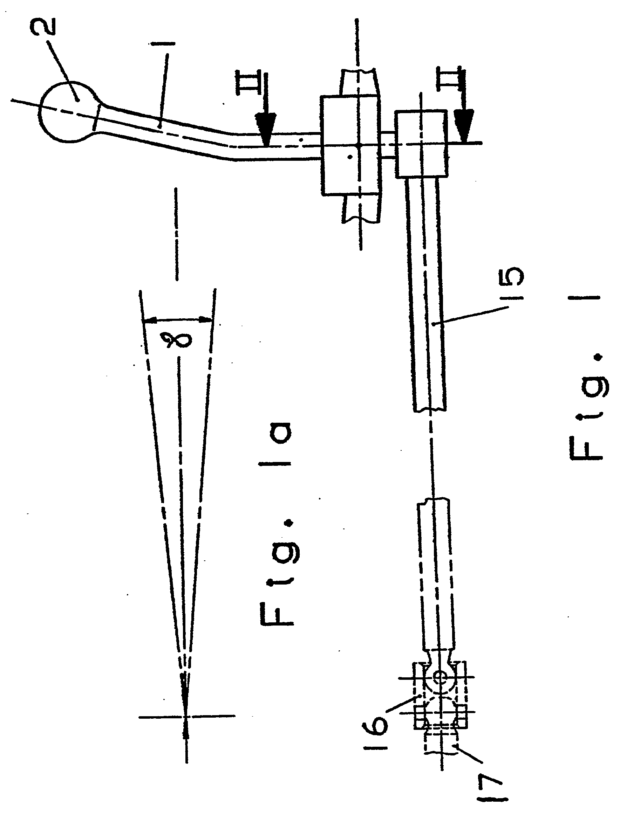

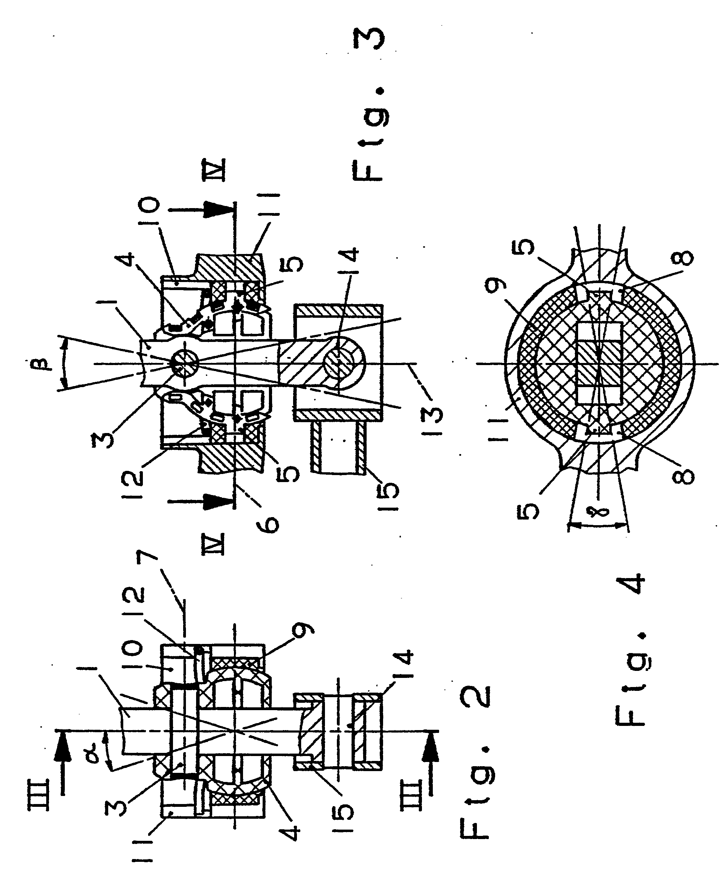

Bei der Bewegung des Schalthebels 1 um die Wählachse 6 im Bereich des in Figur 2 bezeichneten Wählwinkels alpha bewegt sich das Scharniergelenk 14 auf einem Kreisbogen, so daß das angelenkte Ende der Schaltstange 15 gleichzeitig in der Höhe und gegenüber der Längsachse der Schaltwelle 17 um den Auslenkwinkel gamma verlagert wird. Diese Verlagerung um den Auslenkwinkel gamma hat eine Verdrehung des Schalthebels 1 und des Schaltlagerkörpers 4 um die Hochachse 13 des Schalthebels zur Folge, die durch Bewegung der Zapfen 5 in den schlitzförmigen Ausnehmungen 8 des Ringes 9 ermöglicht wird, wobei die Ausnehmungen 8 gleichzeitig eine Begrenzung für diesen Drehwinkel bilden. Bei der Bewegung des Schalthebels 1 im Bereich des Schaltwinkels beta erfolgt eine Axialverschiebung der Schaltstange 15, die unmittelbar auf die Schaltwelle 17 übertragen wird, wobei das Scharniergelenk 14 ebenfalls eine Höhenverlagerung erfährt, die jedoch ohne jeden weiteren Einfluß bleibt. Die Zeichnung zeigt bereits ein sehr kompaktes Ausführungsbeispiel, dessen Abmessungen jedoch noch weiter dadurch verringert werden können, daß die Achsen 6 und 7 sich in gemeinsamer Ebene kreuzend angeordnet werden. Gegebenenfalls kann auch auf die kugelige Außenkontur des Schaltlagerkörpers verzichtet werden.

## Patentansprüche

1. Lagerung für den Schalthebel zur mechanischen Fernbetätigung der Schaltwelle eines Wechselgetriebes in Kraftfahrzeugen, bei der der Schalthebel sowohl um eine Wählachse als auch um eine dazu im Winkel liegende Schaltachse in einem an der Karosserie festen Bauteil schwenkbar gelagert und mittels einer Schaltstange mit der Schaltwelle im Wechselgetriebe gelenkig verbunden ist, dadurch gekennzeichnet, daß der Schalthebel (1) um eine definierte Achse (7) schwenkbar in einem beweglichen Schaltlagerkörper (4) abgestützt und dieser Schaltlagerkörper (4) um eine andere definierte Achse (6) sowie mit eingeschränktem Drehwinkel um die durch die Mitte der ersteren Achse (7) und die Gelenkverbindung (14) mit der Schaltstange (15) gelegte Hochachse (13) drehbar in dem an der Karosserie festen Bauteil (11) gelagert ist.

2. Lagerung nach Anspruch 1, dadurch gekennzeichnet, daß ein außen kugeliger Schaltlagerkörper (4) vorgesehen und mit Zapfen (5), deren gemeinsame Achse (6) im rechten Winkel zur Schwenkachse (7) des Schalthebels (1) im Schaltlagerkörper (4) liegt, in Ausnehmungen (8) des an der Karosserie festen Bauteils (9,11) um die gemeinsame Achse (6) schwenkbar als auch um die Hochachse (13) drehbar in dem an der Karosserie festen Bauteil (11) gelagert ist.

3. Lagerung nach den Ansprüchen 1 und 2, dadurch gekennzeichnet, daß der Schaltlagerkörper (4) mit seinen Lagerzapfen (5) in sich peripher zur Hochachse (13) des Schalthebels (1) erstreckenden Schlitzen (8) begrenzter Länge gelagert ist, die in einem in das Bauteil (11) der Karosserie eingesetzten Ring (9) angeordnet sind.

4. Lagerung nach den Ansprüchen 1 bis 3, dadurch gekennzeichnet, daß das untere Ende des um drei definierte Achsen (6,7,13) beweglichen Schalthebels (1) und die Schaltstange (15) ein nur in einer Ebene bewegliches Scharniergelenk (14) aufweisen.

5. Lagerung nach Anspruch 3, dadurch gekennzeichnet, daß der in das Bauteil (11) der Karosserie eingesetzte Ring (9) aus einem verschleißarmen Kunststoff besteht und in einer Ausnehmung (10) des Bauteils (11) mittels eines Federringes (12) gehalten ist.

## Claims

1. Mounting for the gearshift lever for the mechanical remote operation of the gearshift lever shaft of a change-speed transmission in motor vehicles, in which the gearshift lever is pivotably mounted in a component, which is fixed to the body, both about a selection axis and a shift axis, which is disposed at an angle to the latter, and is hinged by means of a gearshift rod to the gearshift lever shaft in the change-speed transmission, characterised in that the gearshift lever (1) is pivotably supported in a mobile gearshift bearing body (4) about a defined axis (7) and this gearshift bearing body (4) is rotatably mounted in the component (11), which is fixed to the body, about another defined axis (6) and, with a limited angle of rotation, about the vertical axis (13) passing through the centre of the first axis (7) and the hinge connection (14) with the gearshift rod (15).

2. Mounting according to claim 1, characterised in that an externally spherical gearshift bearing body (4) is provided which is pivotably mounted in recesses (8) in the component (9, 11), which is fixed to the body, about the common axis (6) and rotatably mounted in the component (11), which is fixed to the body, about the vertical axis (13) by means of pins (5), the common axis (6) of which extends at a right angle to the pivot axis (7) of the gearshift lever (1) in the gearshift bearing body (4).

3. Mounting according to claims 1 and 2, characterised in that the gearshift bearing body (4) is mounted via its fulcrum pins (5) in slots (8), which extend peripherally to the vertical axis (13) of the gearshift lever (1), are of a limited length and are arranged in a ring (9) which is inserted in the component (11) of the body.

4. Mounting according to claims 1 to 3, characterised in that the lower end of the gearshift lever (1), which can move about three defined axes (6, 7, 13), and the gearshift rod (15) comprise a hinge joint (14) which can only move in one plane.

5. Mounting according to claim 3, characterised in that the ring (9), which is inserted in the component (11) of the body, consists of a low-wear plastic material and is held in a recess (10) in the component (11) by means of a spring washer (12).

## Revendications

1. Palier destiné aux leviers de manœuvre pour la commande mécanique à distance de l'arbre de manœuvre d'une boîte de vitesses de véhicule automobile , dans lequel le levier de manœuvre est monté basculant autour d'un axe de sélection ainsi qu'autour d'un axe de manœuvre, formant un angle par rapport au premier, dans un élément constitutif solidaire de la carrosserie, et est relié articulé à l'arbre de manœuvre de la boîte de vitesses, au moyen d'une tringle de manœuvre, caractérisé en ce que le levier de manœuvre (1) prend appui, basculant autour d'un axe (7) défini, dans un corps de palier de manœuvre (4) mobile, et ce corps de palier de manœuvre (4) est monté pivotant, autour d'un autre axe défini (6), ainsi qu'avec un angle de rotation limité, autour de l'axe vertical (13), passant par le milieu du premier axe (7) et par la liaison d'articulation (14) avec la tringle de manœuvre (15), dans l'élément constitutif (11) solidaire de la carrosserie.

2. Palier selon la revendication 1, caractérisé en ce qu'on prévoit un corps de palier de manœuvre (4), sphérique extérieurement, lequel est monté, par des pivots (5) dont l'axe commun (6) forme un angle droit par rapport à l'axe de basculement (7) du levier de manœuvre (1), dans le corps de palier de manœuvre (4), dans des évidements (8) de l'élément constitutif (9, 11), solidaire de la carrosserie, de manière à basculer autour de l'axe commun (6) et à tourner autour de l'axe vertical (13), dans l'élément constitutif (11), solidaire de la carrosserie.

3. Palier selon les revendications 1 et 2, caractérisé en ce que le corps de palier de manœuvre (4) est monté, avec ses pivots (5), dans des fentes (8), de longueur limitée, s'étendant périphériquement par rapport à l'axe vertical (13) du levier de manœuvre (1), lesquelles fentes sont disposées dans un anneau (9), placé dans l'élément constitutif (11) de la carrosserie.

4. Palier selon les revendications 1 à 3, caractérisé en ce que l'extrémité inférieure du levier de manoeuvre (1), mobile autour de trois axes définis (6, 7, 13) et la tringle de manœuvre (15) comportent une seule articulation à charnière (14), mobile dans un plan.

5. Palier selon la revendication 3, caractérisé en ce que l'anneau (9), placé dans l'élément constitutif (11) de la carrosserie, est réalisé dans une matière plastique, peut sujette à usure, et est maintenu dans un évidement (10) de l'élément constitutif (11), par un jonc élastique (12).

Fig. Ia

Fig. I

Fig. 2

Fig. 3

Fig. 4

EP 0 332 842 B1